# EUROPÄISCHE PATENTSCHRIFT

(11) **EP 1 486 363 B1**
(45) Veröffentlichungstag und Bekanntmachung des Hinweises auf die Patenterteilung: **15.08.2007**
(21) Anmeldenummer: 03291428.5
(22) Anmeldetag: 13.06.2003
(51) Int. Cl.: B60H 1/22

(54) **Heizungsanordnung mit PTC-Element, insbesondere für ein Kraftfahrzeug**
Heating arrangement comprising a ptc element, in particular for a vehicle
Dispositif de chauffage comprenant un élément ptc, en particulier pour véhicule

(43) Veröffentlichungstag der Anmeldung: 15.12.2004
(73) Patentinhaber: Behr France Rouffach SAS, 68250 Rouffach (FR)
(72) Erfinder: Brun, Michel, 68740 Rustenhart (FR); Schmittheisler, Christophe, 67680 Epfig (FR); Miss, Pascal, 67600 Selestat (FR); Mundel, Maxime, 68250 Pfaffenheim (FR); Papi, Yannick, 68740 Munchhouse (FR); Mougey, Mathieu, 68190 Ensisheim (FR)
(74) Vertreter: Grauel, Andreas

(56) Entgegenhaltungen:
- EP-A- 0 705 055
- EP-A- 0 901 311
- EP-A- 1 061 776

## Beschreibung

Die Erfindung betrifft eine Heizungsanordnung mit einem PTC-Element, insbesondere für ein Kraftfahrzeug, gemäß dem Oberbegriff des Anspruchs 1.

Aus der DE 101 44 757 A1 ist eine Heizungsanordnung mit einem PTC-Element für Personenfahrzeuge bekannt, wobei eine Zusatzheizung mit einem Heizkörper, der im Betrieb der Zusatzheizung von Heizluft durchströmt wird, und mit mindestens einer Luftaustrittsöffnung im Fußbereich eines Fahrgastraumes versehen ist, zu der die Heizluft geleitet wird. Um auf flexible Weise eine vertikale Temperaturschichtung im Fahrgastraum erzeugen zu können, die insbesondere auch an Sitzen im Fond als angenehm empfunden wird, ist der Heizkörper als ein elektrisches PTC-Element gestaltet, welches unmittelbar an der Luftaustrittsöffnung im Fußbereich angeordnet ist. Ein derartiger Zuheizer lässt noch Wünsche offen. Gemäß einem offenbarten Ausführungsbeispiel ist ein PTC-Element in Gestalt mehrerer Heizwaben in einem nicht näher beschriebenen Kunststoff-Rahmen angeordnet, der die Luftaustrittsöffnung einfasst.

In der europäischen Patentanmeldung EP 0705055 A2 ist eine elektrische Heizeinrichtung für Kraftfahrzeuge unter Verwendung von zwischen Elektrodenblechen eingespannten PTC-Elementen offenbart. Die PTC-Elemente werden zwischen den Elektrodenblechen durch einen Ausnehmungen aufweisenden Halterahmen in Position gehalten. Die Elektrodenbleche sind an ihren Enden L-förmig abgewinkelt. Die abgewinkelten Abschnitte sind dabei an entgegengesetzten Enden des Heizelements und in entgegengesetzter Richtung angeordnet, wobei die Anordnung derart erfolgt, dass die abgewinkelten Abschnitte mit benachbarten Elektrodenabschnitten in gegenseitiger Anlage sind.

In der europäischen Offenlegungsschrift EP 1061776 A1 wird ein PTC-Heizkörper für Kraftfahrzeuge nach dem Oberbegriff des Anspruchs 1 offenbart, bei dem die PTC-Elemente zwischen den Elektrodenblechen ebenfalls durch einen Ausnehmungen für die PTC-Elemente aufweisenden Halterahmen positioniert werden. Ein Teil der Elektrodenbleche ist in Längsrichtung verlängert und dient als elektrisches Steckelement zur Stromversorgung des Heizkörpers.

In der europäischen Offenlegungsschrift EP 0901311 A2 ist ein weiterer PTC-Heizkörper für Kraftfahrzeuge nach dem Oberbegriff des Anspruchs 1 offenbart, bei dem das PTC-Element-Elektrodenblech-Wellrippen-Heiznetz in einem zweiteiligen Kunststoff-Rahmen aufgenommen ist, der zusätzlich die Steuerelektronik des Heizkörpers aufweist. Die Stromversorgung erfolgt über flexible Kabel, welche am PTC-Heizkörper angeschraubt sind.

In der DE 197 24 734 ist eine elektrische Heizeinrichtung für Kraftfahrzeuge beschrieben, die mehrere Siliciumheizelemente aufweist. Die Siliciumheizelemente werden an ihren Enden von Blechen gehalten, welche U-förmige Aufnahmen aufweisen. Gleichzeitig dienen die Bleche der Stromzuführung. Zur Wärmeabfuhr ist eine Wellrippe auf die Heizelementen geklebt oder gelötet.

Es ist Aufgabe der Erfindung, eine verbesserte Heizungsanordnung mit PTC-Element zur Verfügung zu stellen.

Diese Aufgabe wird gelöst durch eine Heizungsanordnung mit einem PTC-Element mit den Merkmalen des Anspruchs 1. Vorteilhafte Ausgestaltungen sind Gegenstand der Unteransprüche.

Erfindungsgemäß ist eine Heizungsanordnung mit einem PTC-Element vorgesehen, die einen das PTC-Element sowie diesem zugeordnete Wellrippen, worunter auch andere, Wellrippen entsprechende Wärmeübertragungsanordnungen verstanden werden sollen, aufnehmenden Kunststoff-Rahmen aufweist, der zweiteilig ausgebildet ist. Bevorzugt erfolgt die Verbindung zwischen den beiden Teilen des Kunststoff-Rahmens mittels einer Clips-Verbindung, jedoch sind auch andere Verbindungen möglich.

Der Kunststoff-Rahmen weist mindestens eine Öffnung, insbesondere zwei Öffnungen, für zwei Kontaktbleche auf, wobei der Kunststoff-Rahmen in der Nähe der Öffnung bzw. der Öffnungen als Stecker ausgebildet ist.

Der Stecker ist in einem rechten Winkel zu den den elektrischen Kontakt herstellenden Kontaktblechen ausgebildet, wobei ein Kabel und der Stecker parallel zur Richtung des Luftstromes ausgerichtet sind. Dies ermöglicht eine einfache, raumsparende Anordnung.

Bevorzugt ist das PTC-Element an einem Kontaktblech mittels einer Klebe-Verbindung angebracht. Eine derartige Klebe-Verbindung ist einfach herzustellen und bildet eine sichere Verbindung. Bevorzugt wird ein Zwei-Komponenten-Silikon-Klebstoff verwendet. Bevorzugt sind auf beiden Seiten des PTC-Elements Kontaktbleche angebracht, welche parallel zueinander verlaufen.

Auf der dem PTC-Element abgewandten Seite des Kontaktblechs ist vorzugsweise eine Wellrippe mittels einer Klebe-Verbindung angebracht, insbesondere mittels eines Zwei-Komponenten-Silikon-Klebstoffs. Ferner ist bevorzugt auf der dem PTC-Element abgewandten Seite der Wellrippe ein weiteres Kontaktblech mittels einer Klebe-Verbindung an der Wellrippe angebracht, bevorzugt mittels eines Zwei-Komponenten-Silikon-Klebstoffs.

Vorzugsweise sind zwei Kontaktbleche derart ausgebildet, dass sie an ihrem einen Ende als Teil eines Steckers ausgebildet. Dies vereinfacht die Montage, da an den Kontaktblechen kein Stecker angebracht werden muss. Hierfür sind die beiden Kontaktbleche bevorzugt. L-förmig ausgebildet.

Am Rahmen ist vorzugsweise eine Lasche zur Anbringung der Heizungsanordnung in oder an einem Luftkanal vorgesehen. Die Befestigung kann vorzugsweise mittels einer oder mehrerer Schrauben oder mittels einer Clips-Verbindung erfolgen.

Am Rahmen sind bevorzugt auf der Innenseite in Richtung des Luftstromes verlaufenden Rippen vorgesehen. Diese dienen unter anderem der Erhöhung der Stabilität des Rahmens, sowie der Führung der im Rahmen angeordneten Anordnung von PCT-Element, Wellrippen und Kontaktblechen.

Im Folgenden wird die Erfindung anhand eines Ausführungsbeispiels unter Bezugnahme auf die Zeichnung im Einzelnen erläutert. In der Zeichnung zeigen:

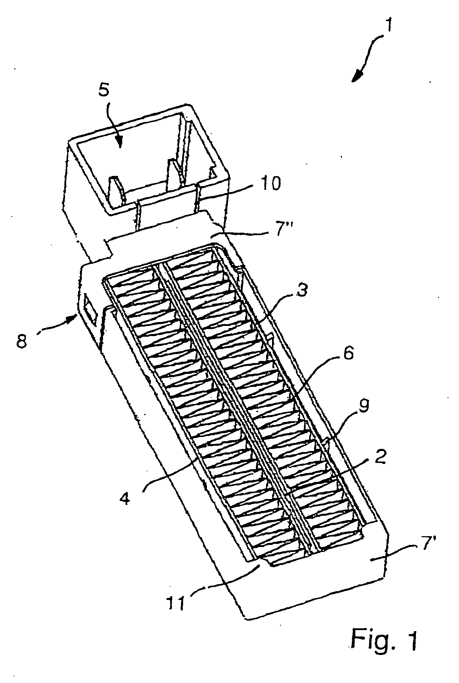

- Fig. 1: eine perspektivische Ansicht auf eine erfindungsgemäße Heizungsanordnung,
- Fig. 2: eine andere perspektivische Ansicht auf die Heizungsanordnung von Fig. 1,
- Fig. 3: die Heizungsanordnung von Fig. 1 in einer Explosionsdarstellung,
- Fig. 4: eine Draufsicht auf die Heizungsanordnung von Fig. 1,
- Fig. 5a und 5b: eine Darstellung der Integration in die Luftkanäle aus zwei verschiedenen Perspektiven,

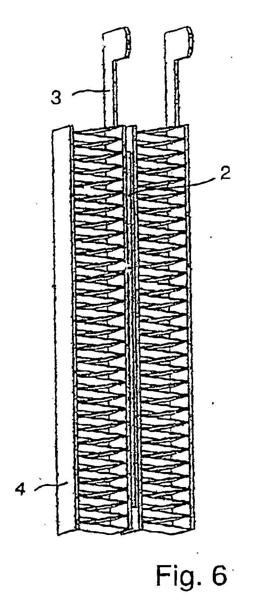

- Fig. 6: eine perspektivische Ansicht eines Heizgitters mit PTC-Element ohne Rahmen, und

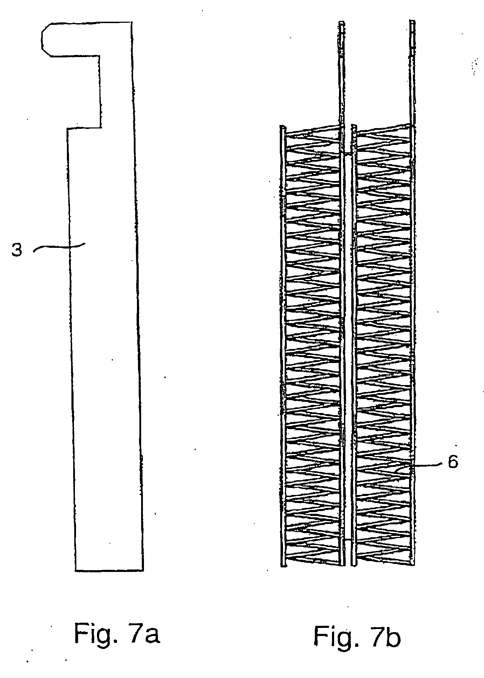

- Fig. 7a und 7b: perspektivische Ansichten des Heizgitters von Fig. 6 ohne PTC-Element,

Bei einer erfindungsgemäßen einstufige PTC-Heizungsanordnung 1 mit einem PTC-Element 2 ist das PTC-Element 2 zwischen zwei Kontaktblechen 3 und 4 eingeklebt, vorliegend mittels eines Zwei-Komponenten-Silikon-Klebstoffes, wobei das mit dem Bezugszeichen 3 versehene Kontaktblech L-förmig ausgebildet ist und mit seinem abgewinkelten Ende einen Teil eines Steckers 5 bildet. Das mit dem Bezugszeichen 4 bezeichnete Kontaktblech ist im Wesentlichen rechteckförmig ausgebildet und parallel zum anderen Kontaktblech 3 angeordnet.

Auf den jeweils dem PTC-Element 2 gegenüberliegenden Seiten der Kontaktbleche 3 und 4 sind mittels einer entsprechenden Klebe-Verbindung Wellrippen 6 angebracht und an diesen, ebenfalls wiederum mit einer entsprechenden Klebe-Verbindung je ein weiteres Kontaktblech 3 und 4, wobei diese Kontaktbleche den zuvor beschriebenen Kontaktblechen 3 und 4 entsprechen.

Um die zuvor beschriebene Anordnung herum ist ein zweiteiliger Kunststoff-Rahmen 7 angeordnet. Ein Teil 7' weist einen rechteckförmigen Bereich, welcher das PTC-Element 2, die Kontaktbleche 3 und 4, sowie die Wellrippen 6 aufnimmt, und einen mit diesem verbundenen kastenförmigen Bereich, welcher den äußeren Teil des Steckers 5 bildet, auf. Der zweite Teil 7" des Kunststoff-Rahmens 7 ist C-förmig ausgestaltet und auf den ersten Teil 7' mittels einer Clips-Verbindung 8 geclipst. Hierfür sind am den beiden Schenkeln des zweiten Teils 7" Vorsprünge vorgesehen, die in entsprechende im ersten Teil 7' vorgesehene Öffnungen ragen und eine schnelle und sichere Verbindung der beiden Teile 7' und 7" ermöglichen, wobei der zweite Teil 7" sicher stellt, dass die Anordnung sicher im Kunststoff-Rahmen 7 gehalten wird.

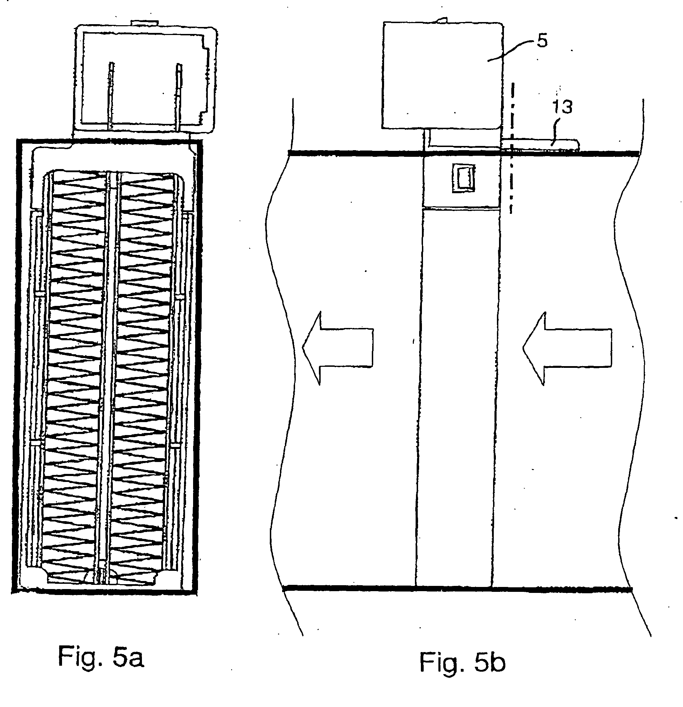

Am ersten Teil 7' sind Rippen 9 angeordnet, die parallel zueinander in Richtung des Luftstroms verlaufen. Die Richtung des Luftstroms ist in Fig. 5b durch Pfeile angedeutet. Die Rippen 9 erhöhen die Festigkeit des Kunststoff-Rahmens 7. Ferner sind im ersten Teil 7' zwei schlitzförmige Öffnungen 10 vorgesehen, welche einen Durchlass für die L-förmigen Kontaktbleche 3 bilden.

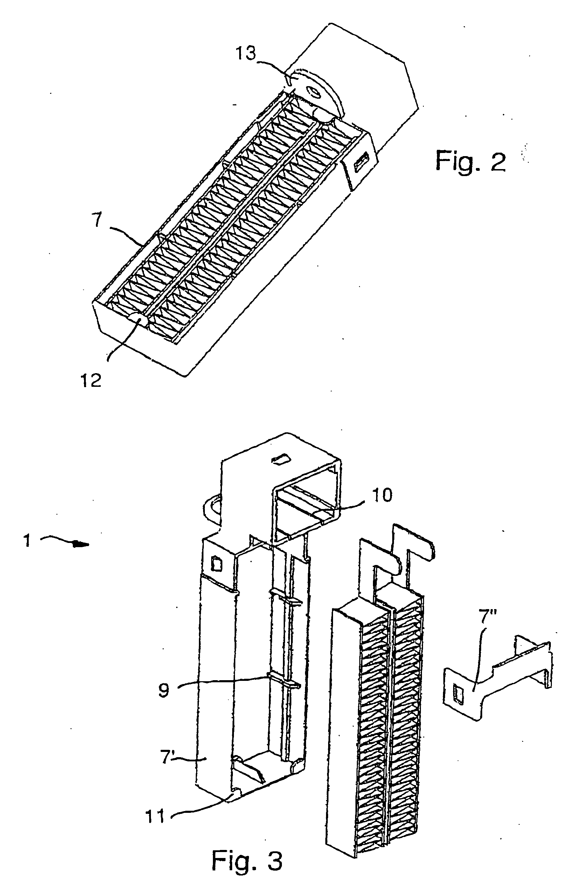

Am Teil 7', an den beiden Ecken, die vom Stecker 5 beabstandet sind, sind Vorsprünge 11 vorgesehen, welche der zusätzlichen Fixierung der Anordnung im Kunststoff-Rahmen 7 dienen. Auf der Unterseite des Teils 7' sind, wie Fig. 2 entnommen werden kann, mittig in der Längsachse des Teils 7' angeordnet, ebenfalls zwei Vorsprünge 12 vorgesehen, welche zur Positionierung der Anordnung im Kunststoff-Rahmen 7 in der entsprechenden Richtung dienen. Der Kunststoff-Rahmen 7 weist ferner eine am Teil 7' angeordnete Lasche 13 auf, welche zur Befestigung in einem Luftkanal mittels einer Schraube (nicht dargestellt) dient (siehe Fig. 5b). Alternativ kann die Befestigung beispielsweise mittels einer Clips-Verbindung erfolgen.

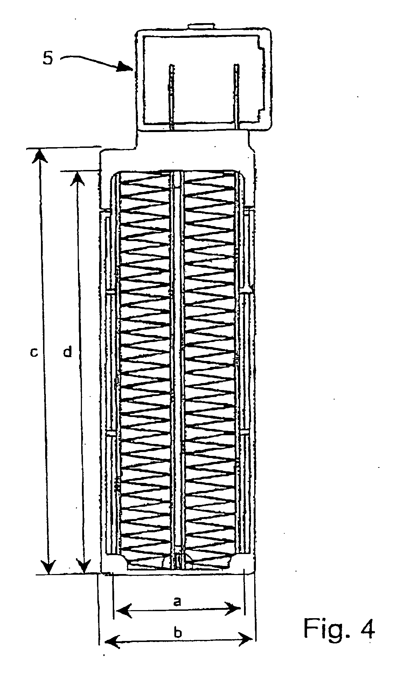

Wie aus Fig. 4 ersichtlich, ist das Verhältnis der freien Fläche, welche etwa a x d entspricht, zur Gesamtfläche b x c recht groß, so dass der Druckabfall im Luftkanal verhältnismäßig gering ist, so dass eine relativ geringe Gebläseleistung erforderlich ist. Hierbei entspricht a der durchströmbaren Breite, b der Gesamtbreite, c der Gesamtlänge und d der durchströmbaren Länge der Heizungsanordnung 1 ohne Stecker 5. Vorliegend liegt das Verhältnis von a x d zu b x c bei ca. 84%.

Vorzugsweise ist die Heizungsanordnung mit PTC-Element als dezentraler Zuheizer außerhalb des Klimagerätes beispielsweise in entsprechenden Luftkanälen in der A-Säule, B-Säule, C-Säule oder in einer Tür angeordnet.

### Bezugszeichenliste

- 1: Heizungsanordnung
- 2: PTC-Element
- 3: L-förmiges Kontaktblech
- 4: Kontaktblech
- 5: Stecker
- 6: Wellrippe
- 7: Kunststoff-Rahmen
- 7': Teil
- 7": Teil
- 8: Clips-Verbindung
- 9: Rippe
- 10: Öffnung
- 11: Vorsprung
- 12: Vorsprung
- 13: Lasche

## Patentansprüche

1. Heizungsanordnung mit PTC-Element, insbesondere für ein Kraftfahrzeug, wobei um das PTC-Element (2) Wellrippen (6) für eine verbesserte Wärmeübertragung an einen die Heizungsanordnung (1) durchströmenden Luftstrom angeordnet sind, die Heizungsanordnung (1) einen Kunststoff-Rahmen (7) aufweist, der zweiteilig ausgebildet ist, wobei der Kunststoff-Rahmen (7) mindestens eine Öffnung (10) für zwei Kontaktbleche (3) aufweist und in der Nähe der Öffnung bzw. der Öffnungen (10) als Stecker (5) ausgebildet ist, und der Stecker (5) in einem rechten Winkel zu den den elektrischen Kontakt herstellenden Kontaktblechen (3) ausgebildet ist, **dadurch gekennzeichnet, dass** ein Kabel und der Stecker (5) parallel zur Richtung des Luftstromes ausgerichtet sind.

2. Heizungsanordnung nach Anspruch 1, **dadurch gekennzeichnet, dass** die beiden Teile (7', 7") des Kunststoff-Rahmens (7) mittels einer Clips-Verbindung (8) miteinander verbunden sind.

3. Heizungsanordnung einem der vorhergehenden Ansprüche, **dadurch gekennzeichnet, dass** auf beiden Seiten des PTC-Elements (2) Kontaktbleche (3, 4) angebracht sind.

4. Heizungsanordnung einem der vorhergehenden Ansprüche, **dadurch gekennzeichnet, dass** das PTC-Element (2) an einem Kontaktblech (3, 4) mittels einer Klebe-Verbindung angebracht ist.

5. Heizungsanordnung einem der vorhergehenden Ansprüche, **dadurch gekennzeichnet, dass** auf der dem PTC-Element (2) abgewandten Seite des Kontaktblechs (3, 4) eine Wellrippe (6) mittels einer Klebe-Verbindung angebracht ist.

6. Heizungsanordnung nach einem der vorhergehenden Ansprüche, **dadurch gekennzeichnet, dass** auf der dem PTC-Element (2) abgewandten Seite der Wellrippe (6) ein weiteres Kontaktblech (4, 3) mittels einer Klebe-Verbindung an der Wellrippe (6) angebracht ist.

7. Heizungsanordnung nach einem der vorhergehenden Ansprüche, **dadurch gekennzeichnet, dass** zwei Kontaktbleche (3) derart ausgebildet sind, dass sie an ihrem einen Ende als Teil eines Steckers (5) ausgebildet sind.

8. Heizungsanordnung nach Anspruch 7, **dadurch gekennzeichnet, dass** die beiden Kontaktbleche (3) L-förmig ausgebildet sind.

9. Heizungsanordnung nach einem der vorhergehenden Ansprüche, **dadurch gekennzeichnet, dass** der Rahmen eine Lasche (13) zur Anbringung der Heizungsanordnung (1) in oder an einem Luftkanal aufweist.

10. Heizungsanordnung nach einem der Ansprüche, **dadurch gekennzeichnet, dass** der Rahmen (7) auf der Innenseite in Richtung des Luftstromes verlaufenden Rippen (9) aufweist.

11. Heizungsanordnung nach einem der vorherigen Ansprüche, **dadurch gekennzeichnet, dass** die Heizungsanordnung als dezentraler Zuheizer ausgeführt ist, der in einem Luftkanal außerhalb eines Klimagerätes angeordnet werden kann.

12. Heizungsanordnung nach einem der Ansprüche 3, 5 oder 6, **dadurch gekennzeichnet, dass** die Klebe-Verbindung durch einen Zwei-Komponenten-Silikon-Klebstoff gebildet ist.

13. Heizungsanordnung nach einem der vorherigen Ansprüche, **dadurch gekennzeichnet, dass** die Heizungsanordnung durch Relais oder Regler gesteuert wird.

## Claims

1. Heating arrangement comprising a PTC element, in particular for a motor vehicle, wherein the PTC element (2) is surrounded by corrugated fins (6) for better heat transfer to an airflow passing through the heating arrangement (1) and the heating arrangement (1) is provided with a two-part plastic frame (7), wherein the plastic frame (7) has at least one opening (10) for two contact plates (3) and is designed as a plug (5) in the vicinity of the opening or openings (10), and wherein the plug (5) is arranged at right angles to the contact plates (3) providing the electric contact, **characterised in that** a cable and the plug (5) are aligned parallel to the direction of the airflow.

2. Heating arrangement according to claim 1, **characterised in that** the two parts (7', 7") of the plastic frame (7) are joined to one another by means of a clip connection (8).

3. Heating arrangement according to any of the preceding claims, **characterised in that** contact plates (3, 4) are provided on both sides of the PTC element (2).

4. Heating arrangement according to any of the preceding claims, **characterised in that** the PTC element (2) is secured to a contact plate (3, 4) by means of adhesive bonding.

5. Heating arrangement according to any of the preceding claims, **characterised in that** a corrugated fin (6) is attached to the side of the contact plate (3, 4) which is remote from the PCT element (2) by means of adhesive bonding.

6. Heating arrangement according to any of the preceding claims, **characterised in that** a further contact plate (4, 3) is attached to the corrugated fin (6) on the side of the corrugated fin (6) remote from the PCT element (2) by means of adhesive bonding.

7. Heating arrangement according to any of the preceding claims, **characterised in that** two contact plates (3) are designed such that one of their ends forms part of a plug (5).

8. Heating arrangement according to claim 7, **characterised in that** the two contact plates (3) are L-shaped.

9. Heating arrangement according to any of the preceding claims, **characterised in that** the frame features a link plate (13) for mounting the heating arrangement (1) in or on an air duct.

10. Heating arrangement according to any of the preceding claims, **characterised in that** the frame (7) features fins (9) extending on its inside in the direction of the airflow.

11. Heating arrangement according to any of the preceding claims, **characterised in that** the heating arrangement is designed as a decentralised auxiliary heater capable of being located in an air duct outside an air conditioning unit.

12. Heating arrangement according to any of claims 3, 5 or 6, **characterised in that** the adhesive bond is provided by a two-component silicone adhesive.

13. Heating arrangement according to any of the preceding claims, **characterised in that** the heating arrangement is controlled by relays or controllers.

## Revendications

1. Dispositif de chauffage avec un élément PTC, en particulier pour un véhicule automobile, dans lequel des ailettes ondulées (6) sont disposées autour de l'élément PTC (2) pour un meilleur transfert de chaleur à un flux d'air traversant le dispositif de chauffage (1), dans lequel le dispositif de chauffage (1) comprend un cadre de plastique (7), qui est réalisé en deux parties, dans lequel le cadre de plastique (7) présente au moins une ouverture (10) pour deux tôles de contact (3) et a la forme d'une fiche (5) à proximité de l'ouverture ou des ouvertures (10), et la fiche (5) est formée à angle droit par rapport aux tôles de contact (3) formant le contact électrique, **caractérisé en ce qu'**un câble et la fiche (5) sont orientés parallèlement à la direction du flux d'air.

2. Dispositif de chauffage selon la revendication 1, **caractérisé en ce que** les deux parties (7', 7") du cadre de plastique (7) sont assemblées l'une à l'autre par un assemblage à encliquetage (8).

3. Dispositif de chauffage selon l'une quelconque des revendications précédentes, **caractérisé en ce que** des tôles de contact (3, 4) sont disposées sur les deux côtés de l'élément PTC (2).

4. Dispositif de chauffage selon l'une quelconque des revendications précédentes, **caractérisé en ce que** l'élément PTC (2) est monté sur une tôle de contact (3, 4) au moyen d'un assemblage collé.

5. Dispositif selon l'une quelconque des revendications précédentes, **caractérisé en ce qu'**une ailette ondulée (6) est montée sur le côté de la tôle de contact (3, 4) situé à l'opposé de l'élément PTC (2) au moyen d'un assemblage collé.

6. Dispositif de chauffage selon l'une quelconque des revendications précédentes, **caractérisé en ce qu'**une autre tôle de contact (4, 3) est montée sur l'ailette ondulée (6), sur le côté de l'ailette ondulée (6) situé à l'opposé de l'élément PTC (2), au moyen d'un assemblage collé.

7. Dispositif de chauffage selon l'une quelconque des revendications précédentes, **caractérisé en ce que** deux tôles de contact (3) sont réalisées de façon à former à leur première extrémité une partie d'une fiche (5).

8. Dispositif de chauffage selon la revendication 7, **caractérisé en ce que** les deux tôles de contact (3) sont en forme de L.

9. Dispositif de chauffage selon l'une quelconque des revendications précédentes, **caractérisé en ce que** le cadre comporte une patte (13) pour installer le dispositif de chauffage (1) dans ou sur un canal à air.

10. Dispositif de chauffage selon l'une quelconque des revendications précédentes, **caractérisé en ce que** le cadre (7) comporte sur son côté intérieur des ailettes (9) orientées dans la direction du flux d'air.

11. Dispositif de chauffage selon l'une quelconque des revendications précédentes, **caractérisé en ce que** le dispositif de chauffage constitue un chauffage d'appoint décentralisé, qui peut être disposé dans un canal à air à l'extérieur d'un appareil de climatisation.

12. Dispositif de chauffage selon l'une quelconque des revendications 3, 5 ou 6, **caractérisé en ce que** l'assemblage collé est formé par une colle silicone à deux composants.

13. Dispositif de chauffage selon l'une quelconque des revendications précédentes, **caractérisé en ce que** le dispositif de chauffage est commandé par des relais ou des régulateurs.
